(19) Europäisches Patentamt / European Patent Office / Office européen des brevets

(11) **EP 2 706 608 A1**

(12) **EUROPEAN PATENT APPLICATION**

(43) Date of publication:
**12.03.2014 Bulletin 2014/11**

(51) Int Cl.:
**H01M 12/06** (2006.01)     **H01M 12/08** (2006.01)
**C01B 3/08** (2006.01)

(21) Application number: **12183848.6**

(22) Date of filing: **11.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Neos Alternatives Inc
North York, Ontario M9M 2W6 (CA)**

(72) Inventors:
• **Fertman, Mark
  Toronto, Ontario M2N IPS (CA)**
• **Brener, Michael
  Ontario, L4C 0E7 (CA)**

(74) Representative: **Meissner, Bolte & Partner
Anwaltssozietät GbR
Widenmayerstrasse 48
80538 München (DE)**

(54) **Fuel and electrical power generating unit**

(57)     A fuel and electrical power generating unit, comprising at least one non-galvanic hydrogen producing first component containing a liquid hydrogen source material and a hydrogen developing carbon/metal arrangement in a first housing portion having a hydrogen outlet and at least one electrical power generating second component of the metal/air battery type in a second housing portion containing an electrolyte material and provided with electrical contacts, wherein the, or each, first and second housing portions are combined to a portable unitary block.

Fig.1B

EP 2 706 608 A1

## Description

The present invention relates to a fuel and electrical power generating unit, in which conductive water or any other conductive solution is used as an electrolyte.

Electrochemical energy sources, which use seawater as an electrolyte, are suited for a number of applications. Examples have been ships and other watercraft, electronic devices, toys and the like, and highly promising future applications can be seen on a large scale in the growing field of renewable energies. Various types of so-called seawater cells are known.

One of the known types of a seawater cell is a magnesium/oxygen battery comprising a magnesium anode, which utilises seawater as an electrolyte as well as oxygen dissolved in the seawater as an oxidizing agent. The chemical processes taking place in this cell are the following:

On the anode, magnesium is dissolved according to the equation

$$2Mg = 2Mg^{2+} + 4e\text{-}.$$

On the cathode, oxygen is consumed according to the equation

$$O_2 + 2H_2O + 4e\text{-} = 4OH\text{-}.$$

Summarizing, these processes can be described in a simplified manner as follows:

$$2Mg + O_2 + 2H_2O = 2Mg(OH)_2.$$

The anode material can be, as exemplified above, magnesium, but it can also be zinc, a mixture of these elements, and alloys thereof.

US 4,822,698 discloses an energy cell/battery for use in seawater. This battery works according to the aforementioned electrochemical reactions, with magnesium or zinc being used as an anode material and an oxygen electrode as a cathode. The oxygen supplied to the cathode is dissolved in the seawater. This seawater battery consists of a cylindrical oxygen electrode cathode. The structure comprises single or several anode rods, which contain magnesium or zinc. The oxygen electrode is similar to those used in other batteries, e.g., in US 6,372,371 B1.

US 5,405,717 discloses a seawater cell, the power of which is slightly increased compared to that of US 4,822,698. This power increase is caused by the effect of waves, which increases the flow of the seawater through the cathode so as to supply oxygen. The cell structure includes water flow conducting means, which allows the water to flow through the cell. US 5,225,291 discloses a seawater battery which is operable with or without dissolved oxygen due to the use of a hybrid cathode. US 5,427,871 relates to galvanic seawater cells and batteries, respectively, which use oxygen dissolved in the seawater as an oxidizing agent.

Another galvanic type of seawater battery, in which normally seawater is used as an electrolyte, comprises a magnesium anode and a cathode of copper chloride or silver chloride. These long-term batteries do not require oxygen dissolved in seawater; however, they have a small output energy density, are generally heavy, and have large spatial requirements. For example, a Mg/CuCl battery with one watt-year as an output energy may have a length of 8 ½ feet, a diameter of 9 inches, and a weight of approximately 100 pounds. Moreover, these batteries have a limited flexibility with respect to the design and are restricted to a longitudinal shape. Examples are described in US 4,601,961, US 5,288,564, or US 6,656,628 B2.

Metal-air cells are known primary cells comprising an anode made of metal, e.g., of aluminium, magnesium or zinc, and an air cathode which is disposed with a small spacing from the metallic anode, but does not touch the same. A suitable electrolyte is provided in a space between the cathode and anode. The anode is immersed into the electrolyte. Different embodiments of such batteries and methods for the production and use of such batteries are known from the prior art, compare, for example, US 5,004,654, US 5,360,680, US 5,376,471, US 5,415,949, US 5,316,632. Typical metal-air batteries and metal-air fuel cells, respectively, are described, for example, in US 6,127,061.

Besides their use in the above-referenced electrical energy generators, magnesium or electrochemically related metals and their alloys, placed in aqueous solutions, have been used to generate hydrogen, which is being considered as an important energy source of the future. Basic concepts in this regard have been developed by Pacheco, e.g. in US 6,834,623, and this concept has meanwhile matured into semi-commercial products; see www.mee-t.com or www.pachecogenerator.com. In JP 2003 221 201 A a hydrogen generating device is disclosed, which contains magnesium alloy particles consisting of granular magnesium and a plurality of catalytic nickel or iron particulates on the surface and on the inside of the granular magnesium in a closed reactor vessel.

Based on the above-described prior art it is an object of the present invention to provide an improved energy source, which is constructed in a simple manner and being is highly efficient, and applicable for many purposes.

This and other objects are solved by a fuel and electrical power generating unit according to claim 1. Selected embodiments of the invention are subjects of the dependent claims.

It is an aspect of the invention to combine a fuel (hydrogen) generating function and an electrical power generating function in a single multi-purpose generator unit. Notwithstanding that gaseous (or even absorbed) hydrogen and electrical energy are totally different sources or types of energy, respectively, such a combination is both useful from a user's perspective and efficient under production aspects, given that the basic elements of a hydrogen generation process and an electrical power generation process can be identical or closely related to each other. From a user's point of view, in a land vehicle (e.g., an automobile), a water vehicle (e.g., a boat or submarine), or even an airplane, a generator block which delivers both a useful fuel for an engine and electrical energy for electrical equipment is more than attractive. Under production aspects, the usage of one and the same material as source for producing the fuel and as an electrolyte for producing electrical energy is efficient, and the production scheme becomes even more efficient if further device parts are required for the fuel production on the one hand and for the electrical power generation on the other can be combined in a technically useful and technologically efficient manner.

In an embodiment of the invention, an inner space of the, or each, first component and an inner space of the, or each, second component are connected to form an integral inner space of the unitary block, said unitary block is filled with salt water or an aqueous solution serving as both a hydrogen source material of the first component or components, respectively, and as an electrolyte solution of the second component or components, respectively. In this embodiment, it is easy to refill the salt water or the aqueous solution (or any other electrolyte) through a single refill opening and to discharge an exhausted electrolyte beforehand through a single discharge opening. On the other hand, the invention can likewise be embodied in a generator unit wherein the hydrogen generating component(s) and the electrical power generating component(s) are physically separated from each other, i.e. their respective inner spaces are unconnected.

In a further embodiment, the first and/or second component(s) or the unitary block comprise a housing portion formed, in particular injection-moulded, from a plastic material. As mentioned above, the generator block can have a single inner space and can, therefore, basically consist of a single-piece housing body, plus a cover plate. On the other hand, under certain aspects, a modular configuration comprising pre-manufactured central housing portions (in different dimensions) and correspondingly adapted end portions can be preferred.

In a further embodiment, the first component comprises a plurality of hydrogen producing plate-shaped sub-units, each of the sub-units comprising a carbon-based central plate and two liquid permeable outer sheets made of iron-type metal, wherein the outer sheets are spaced with respect to the central plate by means of magnesium or aluminium type spacer elements. With the exception of magnesium, aluminium, or corresponding alloys, the elements between the central plate and the outer sheets can be made from zinc or a zinc alloy, lithium or a lithium alloy, or any other metal which is known to have a hydrogen generating function. It is important that in such embodiments there is no electrical separation between the carbon-type elements and the "magnesium type" metal elements, as the hydrogen producing first component of the generator block works on a non-galvanic basis.

In a more specific embodiment, the spacer elements are configured as cylindrical rods or prismatic bars. Specifically, the liquid permeable outer sheets comprise a plurality of (typically regularly arranged) holes and can be made from commercially available punched sheets. In a further specific embodiment, the respective outer plates of each sub-unit are connected with each other via connector rails, their outer edges forming a protective cage of the central plate.

In another geometrical configuration, the first component comprises a plurality of hydrogen producing cylinder-shaped sub-units, each of the sub-units comprising a carbon-based central cylinder and two liquid permeable outer cylinders made of iron-type metal, wherein the outer cylinders are spaced with respect to the central cylinder by means of magnesium or aluminium type spacer elements.

In such a configuration, the respective outer cylinders of each sub-unit are, more specifically, connected with each other via connector rings, their outer edges forming a protective cage of the central cylinder. Herein, as in the embodiment of the cuboid configuration, punched sheets can be used for forming the outer cylinders of the respective sub-units, by rolling the same into a cylinder shape.

In a further embodiment of the invention, the central plate or central cylinder of the sub-units comprises a metal/carbon laminated structure, in particular formed from two carbon material mats laminated to a steel grid or net, respectively. However, other reinforced sheet-type carbon based elements can be part of the first component, provided that their mechanical stability under operating conditions (e.g. regarding vibrations and friction) are as required.

In a further embodiment, at least one outer surface of the first component is formed by a member which serves as an anode of the second component. Insofar, a single element arranged both at an outer surface of the first component and at an outer surface of the adjacent second component can act both as a (non-galvanic) hydrogen developing body and as an electrode of the metal/air electrochemical cell. In other embodiments of the invention, however, such a common metallic element of both the first and second components does not exist.

In a further embodiment, the second component has an anode which comprises magnesium or a magnesium alloy or aluminium or an aluminium alloy, respectively, and has a cathode which comprises carbon. However, in principle, any well-known anode and cathode materials and structures can be used in the second component, provided that the electrochemical performance and mechanical properties are as required. Given that the generator block typically has to be liquid-tight, the cathode (sheet) material has to be impermeable to the salt water or alkaline solution or other electrolyte inside the second component.

In a further embodiment of the invention, end faces (of a cuboid configuration) or a circumferential cylinder face (of a cylindrical configuration) of the second component is grid- or web-shaped for providing a large contact surface between an outer cathode of the second component and ambient air and, at the same time, sufficient mechanical support and protection for the cathode.

The generator block mentioned above can be achieved with a hydrogen storing unit, in particular a hydrogen tank, which is connected to the hydrogen outlet of the first component, and an electrical pump for pressing hydrogen from the hydrogen outlet into the hydrogen storing means, wherein said pump is connected to the electrical contacts of the second component via fuel and electrical power generating unit control means. (Hydrogen can also be pressurised into hydrogen storing unit and delivered by self created pressure by using pressure regulated valves.)

In an important field of exploiting the invention, the fuel and electrical power generating unit as explained above is part of a vehicle, boat or airplane drive system which comprises a fuel cell and an electrical motor or hydrogen combustion engine, respectively, for driving the respective vessel. More specifically, in a combustion engine fuelled with hydrogen the generator block of the invention can advantageously being used for providing both the fuel for the engine and the electrical energy for the ignition, injection pump etc.

Further aspects and effects of the invention become clear from the more detailed explanation of embodiments on the basis of the attached drawings, of which

Fig. 1A shows an exploded view and Fig. 1B an assembled perspective view of a fuel and electrical power generating block according to the invention,

Fig. 2 shows a perspective view of the inner structure of a first component of the embodiment according to Figs. 1A and 1B,

Figs. 3A to 3D show several views of a sub-unit of the first component according to Fig. 2,

Fig. 4 shows an exploded view of a central plate of the sub-unit according to Figs. 3A to 3D,

Figs. 5A and 5B show a perspective view and a detailed view, respectively, of the central plate of Fig. 4, provided with hydrogen generating elements,

Figs. 6A to 6D show several views of an embodiment of the second components of the generator block according to Figs. 1A to 1B,

Fig. 7 shows a schematic diagram of a generating block according to Fig. 1B with peripheral components, and

Fig. 8 shows a schematic diagram of a generator block according to Fig. 1B, embedded in an engine drive system.

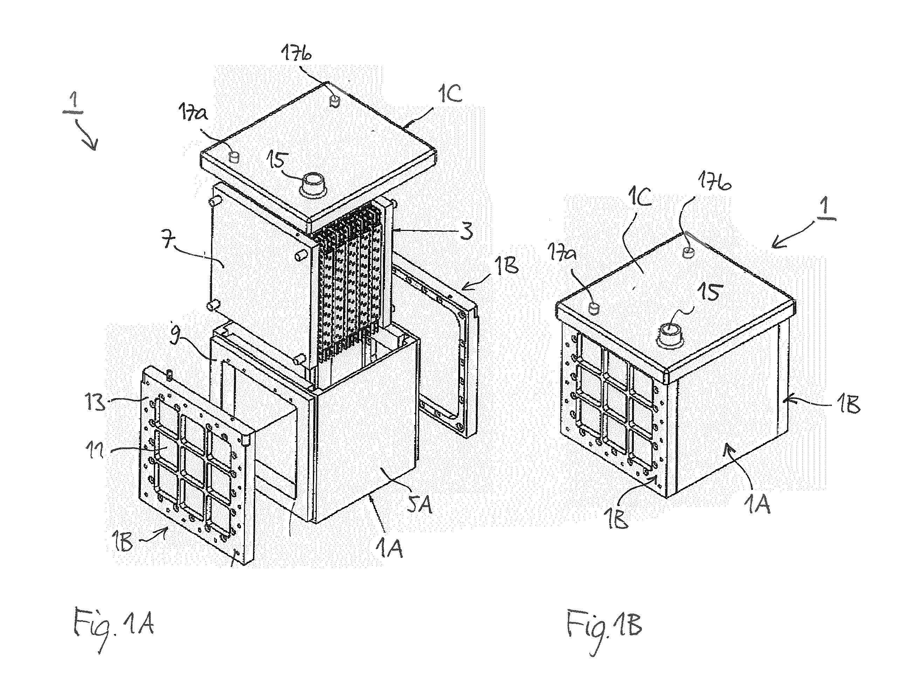

Fig. 1A and 1B schematically illustrate, as an embodiment of the invention, a fuel and electrical power generating unit (generator block) 1, the outer shape of which is that of a cuboid and which comprises a larger first component 1A for generating hydrogen and two smaller second components 1B, attached to the first components at both ends thereof, for generating electrical power. A cover 1C covers both the first component 1A and the two second components 1B.

The first component 1A comprises a hydrogen generating block 3 arranged in a plastic housing portion 5A, and the respective components 1B each comprise an anode plate 7 (which in Fig. 1A is arranged as respective end plates of the hydrogen generating unit 3), a conductive (but partly insulated) frame 9, a membrane-like air cathode 11, and an outer end plate 13 made from plastic and over most of its surface having a grid shape. On the cover 1C, an outlet opening 15 for exhausting hydrogen produced in the first component and electrical contacts 17a, 17b for connecting the generator block 1 to an electrical load are provided.

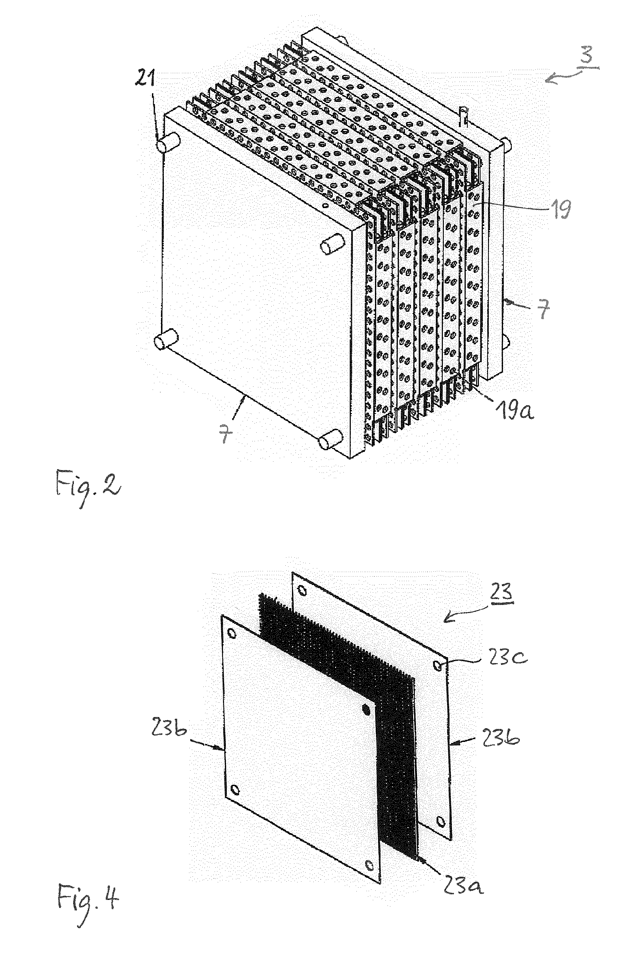

Fig. 2 separately illustrates the hydrogen generating block 3 of the first generator block component 1A, together with the end plates 7 which, according to their function, are part of the respective second generator block components 1B (as mentioned above). The exemplary hydrogen generator block comprises five sub-units 19 in a parallel arrangement to each other and to the end plates 7. In operation, the generator block 3 is arranged in the housing 5A of the first component 1A and immersed in sea water or an alkaline solution or another suitable electrolyte fluid (not shown).

The sub-unit 19 and the end plates 7 are stacked on each other at predetermined spacings and held by rods 21 provided close to the corners of the quadrangular plates or sub-units, respectively. As can be seen in Fig. 2, but described in more detail further below, each of the sub-units 19 has a 3-layer configuration, and most of the extension of their edges is covered with a rail 19a. All outer surfaces of each sub-unit 19 comprise a regular arrangement of through-holes making each of the outer surfaces liquid-permeable.

The end plates 7 are, in an exemplary embodiment, made from magnesium or an alloy thereof, whereas the outer surfaces of the sub-units 19 are made from stainless steel (or another iron alloy) and the rods 21 are made from zinc or an alloy thereof. Other materials can be chosen, depending on the specific operating conditions and taking performance requirements as well as cost constraints of the generator block into account.

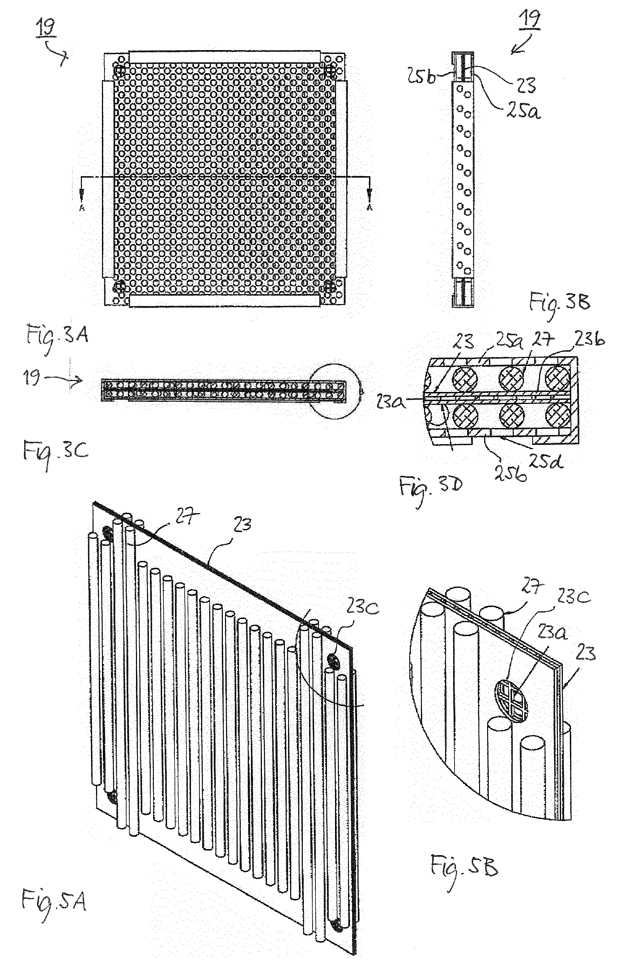

Figs. 3A to 3D show, in a front and side view, as well as in a cross sectional view and a detail illustration, the structure of the sub-units 19 of the hydrogen generating block 3 of Fig. 2 in more detail. As becomes apparent from Figs. 3B to 3D, the sub-units 19 each comprise a central plate 23 and two parallel outer sheets 25a, 25b, both of which have equal distance to the central plate 23. Each of the outer sheets 25a, 25b comprises a regular arrangement of closely neighboured holes 25d, forming a kind of liquid-permeable cage for the central plate 23. In the arrangement shown in Figs. 3A to 3D, the outer sheet 25a is bent two-fold so that the outer edge bracket-like portion thereof extends over the outer edges of the other sheet 25b. This configuration replaces the rails mentioned above in relation to Fig. 2.

As is apparent from Figs. 3C and 3D and from Figs. 5A and 5B, on both surfaces of the central plate 23 a regular arrangement of parallel rods 27 is provided. The rods 27 are made from magnesium or any other material which serves for developing hydrogen when immersed into a hydrogen containing, electrochemically active material. In an exemplary technological embodiment, the rods 27 are glued to both surfaces of the central plate 23 by means of a conductive adhesive, e.g., a commercially available adhesive containing silver particles.

Figs. 3D, 4, and 5B show the structure of the central plate 23 in more detail. As can be seen in each of these figures, the central plate 23 has a three-layer structure comprising an inner metal grid 23a and two outer sheets 23b comprising elementary carbon, rolled upon the inner metal grid 23a. Close to the corners of the outer sheets 23b holes 23c are provided for engagement of the rods 21 for assembling the hydrogen generating unit 3 (see Fig. 2). As in the exemplary embodiment, no corresponding hole is provided in the inner grid 23a of the central plate 23, it is clear that the rods 21 in such an embodiment have to be composed of several short pieces, stacked on each other alternating with the several sub-units 19 or central plates 23 thereof. In another embodiment, holes can be provided even in the corner portions of the inner grid 23a, and in such embodiment long integral rods 21 can be used for assembling the hydrogen generating unit, in combination with spacer rings etc.

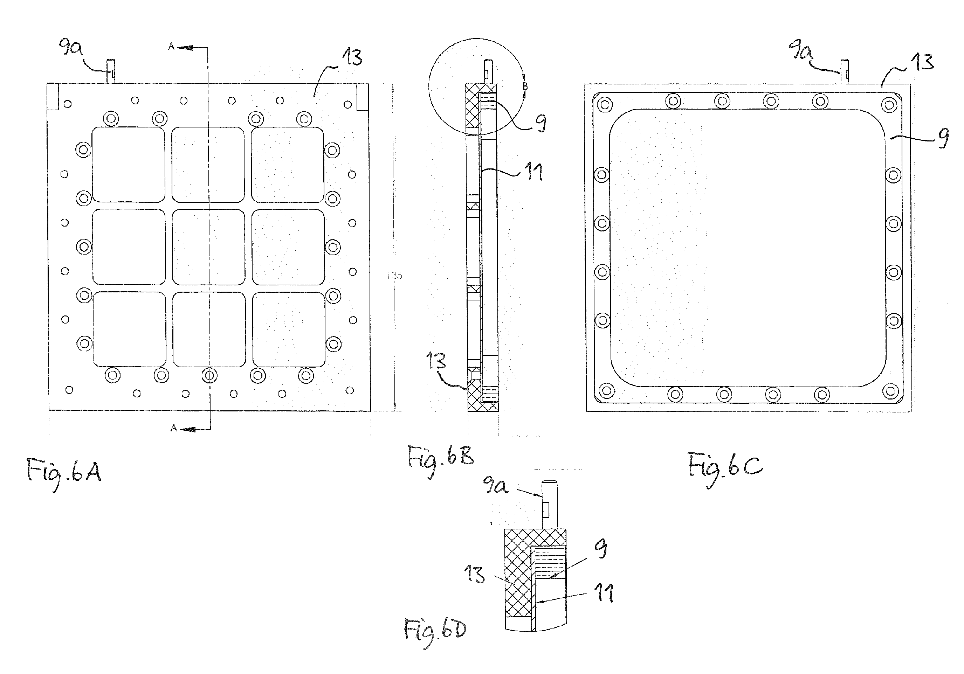

Figs. 6A to 6D illustrate, in a front, cross-sectional, back view, and a detail view, the conductive frame 9, membrane-type air cathode 11, and housing end portion 13 of the second component 1B of the generator block 1 at a larger scale, disclosing more details of the geometrical configuration of those device parts. It is apparent that a number of through-holes is provided in the respective parts, for screwing the plastic parts 13 and, together with them, the conductive frame 9 (with a corresponding electrical insulation, not shown), with the contact pin 9a, to the central portion of the generator block, i.e., to the first component 1A, to form a portable unitary block.

The conductive frame 9 can be made from copper, partly embedded into a rubber insulating layer, and the air cathode 11 can be of any well-known type, specifically including carbon membrane structures which are, on the one hand, oxygen permeable and on the other hand liquid tight and sufficiently stable to keep the aqueous electrolyte inside the generator block even under harsh operating conditions. The quadrangular openings in the plastic housing portion 13 provide for a large contact surface of the air cathode with the ambient air and mechanical support of the cathode.

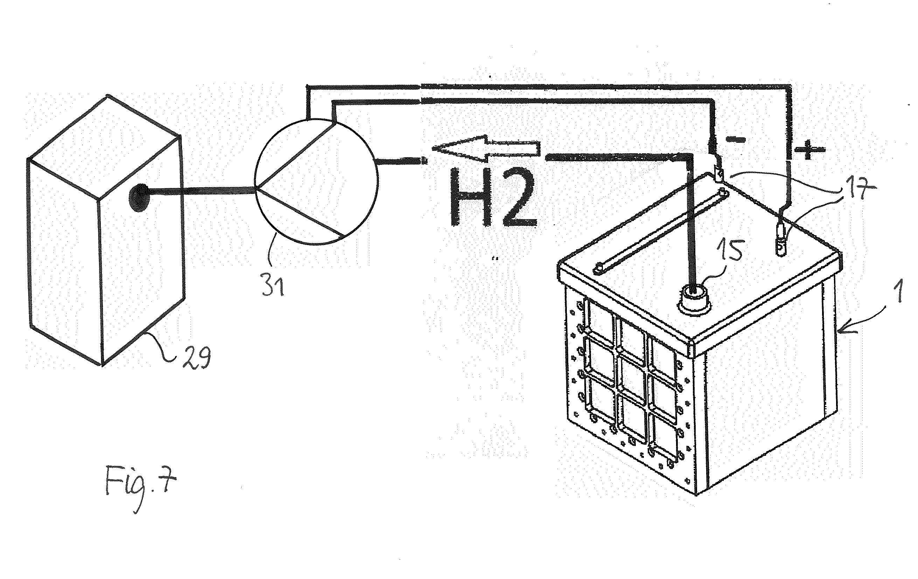

Fig. 7 schematically illustrates how a generator block 1 can be embedded in a technical system which includes a tank 29 as hydrogen storing means and a pump 31 for pumping hydrogen produced in the generator block 1 and exhausted through the hydrogen outlet 15 into the tank. The pump 31 can (at least partly) be driven by electrical energy which is delivered by the generator block 1 itself, through its electrical contacts 17.

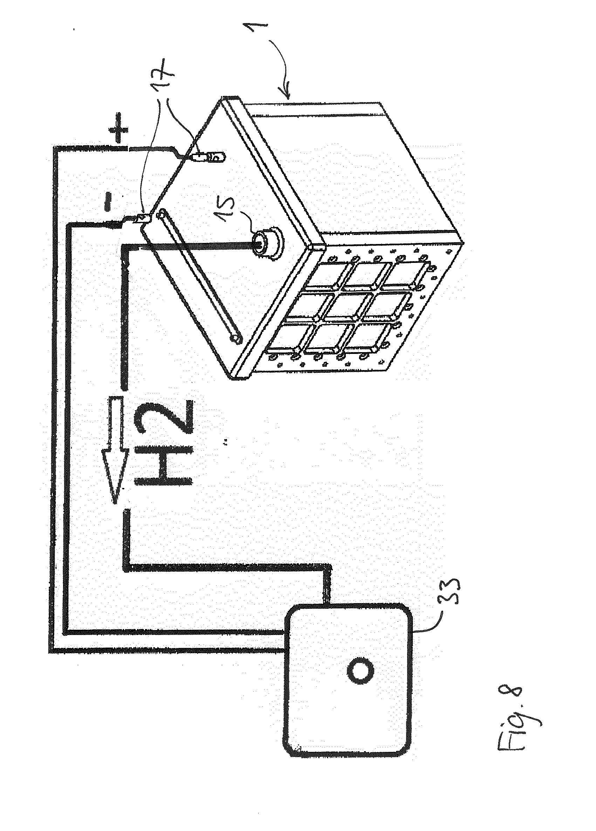

Fig. 8 schematically illustrates another system, wherein the generator block 1 is connected to a rotary combustion engine 33, via both the hydrogen outlet 15 and the electrical contacts 17, for delivering hydrogen for fuelling the combustion engine and electrical energy for operating the ignition and further electrical components thereof, to the engine 33.

The embodiments and aspects of the invention explained above are not determined to limit the scope of the invention, which is exclusively to be determined by the attached claims. Many modifications of the inventive concept are possible within the scope of the claims and, more specifically, arbitrary combinations of the several claim features are considered to be within the scope of the invention.

**Claims**

1. A fuel and electrical power generating unit, comprising:

   at least one non-galvanic hydrogen producing first component containing a liquid hydrogen source material and a hydrogen developing carbon/metal arrangement in a first housing porting having a hydrogen outlet; and
   at least one electrical power generating second component of the metal/air battery type in a second housing portion containing an electrolyte material and
   provided with electrical contacts,
   wherein the, or each, first and second housing portions are combined to a portable unitary block.

2. The fuel and electrical power generating unit of claim 1, wherein

the first and/or second component or the unitary block comprise a housing portion formed, in particular injection-moulded, from a plastic material.

3. The fuel and electrical power generating unit of claim 1, wherein
the first component comprises a plurality of hydrogen producing plate-shaped sub-units, each of the sub-units comprising a carbon-based central plate and two liquid permeable outer sheets made of iron-type metal, wherein the outer sheets are spaced with respect to the central plate by means of magnesium or aluminium type spacer elements.

4. The fuel and electrical power generating unit of claim 3, wherein
the respective outer plates of each sub-unit are connected with each other via connector rails, their outer edges forming a protective cage of the central plate.

5. The fuel and electrical power generating unit of claim 1, wherein
the first component comprises a plurality of hydrogen producing cylinder-shaped sub-units, each of the sub-units comprising a carbon-based central cylinder and two liquid permeable outer cylinders made of iron-type metal, wherein the outer cylinders are spaced with respect to the central cylinder by means of magnesium or aluminium type spacer elements.

6. The fuel and electrical power generating unit of claim 5, wherein
the respective outer cylinders of each sub-unit are connected with each other via connector rings, their outer edges forming a protective cage of the central cylinder.

7. The fuel and electrical power generating unit of one of claims 3 to 6, wherein
the spacer elements are configured as cylindrical rods or prismatic bars.

8. The fuel and electrical power generating unit of one of claims 3 to 7, wherein the central plate or central cylinder of the sub-units comprise a metal/carbon laminated structure, in particular formed from two carbon material mats laminated to a steel grid or net, respectively.

9. The fuel and electrical power generating unit of one of the preceding claims, wherein
at least one outer surface of the first component is formed by a member which serves as an anode of the second component.

10. The fuel and electrical power generating unit of one of the preceding claims, wherein
an inner space of the, or each, first component and an inner space of the, or each, second component are connected to form an integral inner space of the unitary block, said unitary block filled with salt water or an aqueous solution serving as both a hydrogen source material of the first component or components, respectively, and as an electrolyte solution of the second component or components, respectively.

11. The fuel and electrical power generating unit of one of the preceding claims, wherein
the second component has an anode which comprises magnesium or a magnesium alloy, or aluminium or an aluminium alloy, respectively.

12. The fuel and electrical power generating unit of one of the preceding claims, wherein
the second component has a cathode which comprises carbon.

13. The fuel and electrical power generating unit of one of the preceding claims, wherein
end faces or a circumferential cylinder face of the second component is grid- or web-shaped, for providing a large contact surface between an outer cathode of the second component and ambient air and, at the same time, sufficient mechanical support and protection for the cathode.

14. The fuel and electrical power generating unit of one of the preceding claims, wherein
a hydrogen storing unit, in particular a hydrogen tank, is connected to the hydrogen outlet of the first component, and an electrical pump for pressing hydrogen from the hydrogen outlet into the hydrogen storing means is connected to the electrical contacts of the second component via fuel and electrical power generating unit control means.

15. A vehicle drive system, comprising at least one fuel cell and at least one electrical motor, and at least one fuel and electrical power generating unit of one of the preceding claims, wherein the hydrogen outlet of the first component is connected to a hydrogen inlet of the fuel cell and the electrical contacts of the second component are connectable to the electrical motor and/or to a starter unit and/or to an ignition unit of the drive system.

Fig. 1B

Fig. 1A

Fig.2

Fig.4

Fig. 3A

Fig. 3B

Fig. 3C

Fig. 3D

Fig. 5A

Fig. 5B

Fig.6A

Fig.6B

Fig.6C

Fig.6D

Fig. 7

Fig. 8

EP 2 706 608 A1

Europäisches
Patentamt
European
Patent Office
Office européen
des brevets

**EUROPEAN SEARCH REPORT**

Application Number

EP 12 18 3848

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| E | EP 2 528 145 A1 (NIM ENERGY [CA]) 28 November 2012 (2012-11-28) * the whole document * | 1,2, 10-12,15 | INV. H01M12/06 H01M12/08 C01B3/08 |
| X | US 4 081 693 A (STONE GORDON R) 28 March 1978 (1978-03-28) * abstract * * figures 2-4 * * column 2, lines 44-51 * * column 2, line 61 - column 3, line 20 * * column 3, line 39 - column 4, line 43 * * column 5, line 21 - column 6, line 66 * * claims * | 1,2, 10-12,15 | |
| X | KR 2011 0083111 A (DONGSEO TECHNOLOGY HEADQUTERS [KR]) 20 July 2011 (2011-07-20) * paragraphs [0010] - [0049] * * figures 4-6 * | 1,10-12 | |
| X | GIBBONS D W ET AL: "Closed cycle aluminum/oxygen fuel cell with increased mission duration", PROCEEDINGS OF THE INTERNATIONAL POWER SOURCES SYMPOSIUM. CHERRY HILL, NJ., JUNE 22 - 25, 1992; [PROCEEDINGS OF THE INTERNATIONAL POWER SOURCES SYMPOSIUM], NEW YORK, IEEE, US, vol. SYMP. 35, 22 June 1992 (1992-06-22), pages 38-41, XP010103497, DOI: 10.1109/IPSS.1992.282060 ISBN: 978-0-7803-0552-6 * abstract * * sections "Introduction", "Hydrogen Recombination System", "Conclusions" * * figures 1,2,7 * * table 2 * | 1,15 | TECHNICAL FIELDS SEARCHED (IPC) H01M C01B |

The present search report has been drawn up for all claims

| Place of search | Date of completion of the search | Examiner |
|---|---|---|
| The Hague | 21 January 2013 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

13

**ANNEX TO THE EUROPEAN SEARCH REPORT
ON EUROPEAN PATENT APPLICATION NO.**

EP 12 18 3848

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2013

| Patent document cited in search report | | Publication date | Patent family member(s) | | Publication date |
|---|---|---|---|---|---|
| EP 2528145 | A1 | 28-11-2012 | CA<br>EP<br>US<br>WO | 2776768 A1<br>2528145 A1<br>2012301751 A1<br>2012160457 A1 | 26-09-2012<br>28-11-2012<br>29-11-2012<br>29-11-2012 |
| US 4081693 | A | 28-03-1978 | NONE | | |
| KR 20110083111 | A | 20-07-2011 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4822698 A
- US 6372371 B1
- US 5405717 A
- US 5225291 A
- US 5427871 A
- US 4601961 A
- US 5288564 A
- US 6656628 B2

- US 5004654 A
- US 5360680 A
- US 5376471 A
- US 5415949 A
- US 5316632 A
- US 6127061 A
- US 6834623 B
- JP 2003221201 A